(19) Europäisches Patentamt / European Patent Office / Office européen des brevets

(11) **EP 3 910 180 A1**

(12) **DEMANDE DE BREVET EUROPEEN**

(43) Date de publication:
**17.11.2021 Bulletin 2021/46**

(51) Int Cl.:
*F02C 9/20* *(2006.01)*      *F01D 17/16* *(2006.01)*
*F02C 9/54* *(2006.01)*

(21) Numéro de dépôt: **21172478.6**

(22) Date de dépôt: **06.05.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **13.05.2020 BE 202005331**

(71) Demandeur: **Safran Aero Boosters SA**
**4041 Herstal (BE)**

(72) Inventeur: **PRINCIVALLE, Rémy, Henri, Pierre**
**4041 Herstal (BE)**

(74) Mandataire: **Lecomte & Partners**
**76-78, rue de Merl**
**2146 Luxembourg (LU)**

(54) **OUVERTURE TRANSITOIRE D'AUBES STATORIQUES DANS UN COMPRESSEUR DE TURBOMACHINE LORS D'UNE ACCÉLÉRATION**

(57) L'invention a trait à un procédé de commande de la position angulaire d'aubes statoriques (32) à calage variable disposées à l'entrée d'un compresseur (8) d'une turbomachine (2), caractérisé par l'action suivante : lors d'une augmentation du débit de carburant, ouverture transitoire de la position angulaire des aubes statoriques (32).

## Fig. 2

## Description

### Domaine technique

L'invention a trait au domaine des turbomachines, plus particulièrement des turboréacteurs et de leur contrôle en mode transitoire.

### Technique antérieure

Une turbomachine comprend classiquement, d'amont en aval, un compresseur, une chambre de combustion et une turbine. Une turbomachine destinée à la propulsion par réaction est couramment du type double-flux, à savoir avec un turbofan, ou soufflante, en amont du compresseur, produisant un flux primaire pénétrant dans le compresseur, la chambre de combustion et la turbine, et un flux secondaire entourant le flux primaire et circulant axialement de long de l'extérieur de la turbomachine en tant que telle pour ensuite rejoindre le flux primaire à la sortie de ladite machine. Le rapport entre les débits de flux secondaire et primaire est couramment désigné taux de dilution.

Le compresseur est constitué d'une série de rangées d'aubes statoriques et de rangées d'aubes rotoriques, en alternance, chaque paire de rangée d'aubes rotoriques et de rangée d'aubes statoriques directement adjacentes et en aval formant un étage de compression. Les aubes rotoriques et statoriques sont en principe fixes par rapport au rotor et stator, respectivement. Il est toutefois connu de prévoir, à l'entrée du compresseur, une rangée d'aubes statoriques avec un calage angulaire variable et commandé par un actuateur.

Le document de brevet publié WO 2011/042636A1 divulgue un système et un procédé de commande de la position angulaire d'aubes statoriques dans une turbomachine axiale double corps du type turbomoteur. Un premier corps est formé par un compresseur basse-pression et une turbine basse-pression, et un deuxième corps est formé par un compresseur haute-pression en aval du compresseur basse-pression, et une turbine haute-pression en amont de la turbine basse-pression. La rangée d'aubes statoriques à calage variable est située à l'entrée du compresseur haute-pression, sur le deuxième corps. L'angle de calage des aubes statoriques est déterminé classiquement en fonction du régime et de la température du deuxième corps. Cet enseignement prévoit, en outre, un facteur de correction qui est fonction d'un débit de carburant cible déterminé par la poussée désirée, à savoir essentiellement un régime du premier corps. Le facteur de correction est déterminé pour optimiser la consommation de carburant et donc le rendement. Cet enseignement vise ainsi à optimiser la consommation de carburant en fonctionnement stabilisé.

Or les variations de charge d'une turbomachine, génèrent des phénomènes transitoires liés essentiellement à l'inertie du corps ou des corps (dans le cas de turbomachines multi-corps). Les variations de charges sont en effet réalisées essentiellement par des variations de débit de carburant ayant un impact direct sur la distribution de température dans la turbomachine et de contraintes mécaniques qui en résultent.

### Résumé de l'invention

#### Problème technique

L'invention a pour objectif de pallier au moins un des inconvénients de l'état de la technique susmentionné. Plus particulièrement, l'invention a pour objectif d'améliorer le comportement d'une turbomachine lors de variation de charge.

#### Solution technique

L'invention a pour objet un procédé de commande de la position angulaire d'aubes statoriques à calage variable disposées dans un compresseur basse-pression d'une turbomachine axiale, caractérisé par l'action suivante : lors d'une augmentation du débit de carburant, ouverture transitoire de la position angulaire des aubes statoriques.

Par ouverture, on entend un rapprochement du profil de l'aube de l'axe principal de la turbomachine axiale, ou en d'autres termes un déplacement angulaire tendant à aligner les aubes avec ledit axe principal.

Par débit de carburant, on entend le débit de carburant vers la chambre de combustion.

Avantageusement, les aubes statoriques à calage variable sont disposées à l'entrée du compresseur basse-pression. Par entrée du compresseur basse-pression, on entend une première rangée d'aubes statoriques dudit compresseur, suivant un sens normal d'écoulement de la veine fluide dans la turbomachine.

Selon un mode avantageux de l'invention, l'ouverture transitoire est suivie d'une fermeture de la position angulaire des aubes statoriques.

Par fermeture, on entend un rapprochement du profil de l'aube d'une direction perpendiculaire à l'axe principal de la turbomachine axiale, ou en d'autres termes un déplacement angulaire tendant à aligner les aubes avec ladite direction perpendiculaire.

Selon un mode avantageux de l'invention, le débit augmenté de carburant est associé à un régime cible de la turbomachine, la fermeture de la position angulaire des aubes statoriques étant atteinte lorsque le régime cible est atteint.

Selon un mode avantageux de l'invention, la fermeture de la position angulaire des aubes statoriques est opérée de manière progressive avant que le régime cible soit atteint.

Selon un mode avantageux de l'invention, le degré d'ouverture transitoire est fonction de la température dans la turbine, préférentiellement la turbine haute-pression, ledit degré d'ouverture transitoire étant d'autant plus grand que ladite température est élevée.

Selon un mode avantageux de l'invention, le degré d'ouverture transitoire est fonction de l'augmentation de débit de carburant, ledit degré d'ouverture transitoire étant d'autant plus grand que ladite augmentation est élevée.

Selon un mode avantageux de l'invention, l'ouverture transitoire et, le cas échéant la fermeture sont par rapport à une position angulaire en régime stabilisé.

Selon un mode avantageux de l'invention, la position angulaire en régime stabilisé est fonction du régime du compresseur et de la température en entrée dudit compresseur.

Selon un mode avantageux de l'invention, la turbomachine est du type double flux et comprend un turbofan couplé au compresseur. Le couplage peut être direct ou via un réducteur.

Selon un mode avantageux de l'invention, la turbomachine présente un taux de dilution supérieur ou égal à 10, préférentiellement supérieur ou égal à 15.

Selon un mode avantageux de l'invention, la turbomachine comprend un premier corps avec le compresseur basse-pression et une turbine basse-pression, et un deuxième corps avec un compresseur haute-pression en aval du compresseur basse-pression et une turbine haute-pression en amont de la turbine basse-pression, les aubes statoriques à calage variable étant disposées à l'entrée du compresseur basse-pression.

Selon un mode avantageux de l'invention, le turbofan est couplé au premier corps. Le couplage peut être direct ou via un réducteur.

Selon un mode avantageux de l'invention, le régime cible est un régime cible du premier corps.

L'invention a également pour objet une unité de commande d'aubes statoriques à calage variable d'une turbomachine, remarquable en ce que l'unité de commande est configurée pour exécuter le procédé selon l'invention.

L'invention a également pour objet une turbomachine comprenant un compresseur basse-pression, une chambre de combustion et une turbine, le compresseur basse-pression comprenant une rangée d'aubes statoriques à calage variable, et une unité de commande desdites aubes statoriques à calage variable, remarquable en ce que l'unité de commande est selon l'invention.

Avantages de l'invention

Les mesures de l'invention sont intéressantes en ce qu'elles permettent de compenser au moins une partie des effets transitoires indésirables présents lors d'une augmentation de charge de la turbomachine, et ce avec des moyens relativement simples, à savoir une rangée d'aubes à calage variable, et ce aussi sans empêcher la fonction initiale de telles aubes, à savoir un ajustement angulaire desdites aubes en régime stationnaire ou quasi-stationnaire.

Brève description des dessins

La figure 1 est une vue générale en couple longitudinale d'une turbomachine double-corps avec une rangée d'aubes statoriques en entrée du compresseur basse-pression à calage variable selon l'invention.

La figure 2 est vue de détail en couple longitudinale du compresseur basse-pression de la turbomachine de la figure 1.

La figure 3 illustre de manière graphique une augmentation du débit de carburant de la turbomachine de la figure 1.

La figure 4 illustre de manière graphique les variations de régime des premier et deuxième corps de la turbomachine de la figure 1.

La figure 5 illustre de manière graphique une corrélation en mode stationnaire et en mode transitoire entre le débit de carburant et le régime du turbofan.

La figure 6 illustre de manière graphique une corrélation en mode stationnaire et en mode transitoire entre la température dans la turbine haute-pression et le régime du turbofan.

La figure 7 illustre de manière graphique une corrélation en mode stationnaire et en mode transitoire entre le taux de compression du compresseur haute-pression et le débit d'air dans la turbomachine.

La figure 8 illustre de manière graphique une évolution temporelle en mode stationnaire et en mode transitoire selon l'invention de l'angle de calage des aubes statoriques du compresseur basse-pression.

La figure 9 est une représentation géométrique de l'inclinaison d'une aube de la rangée d'aubes statoriques à calage variable.

Description d'un mode de réalisation

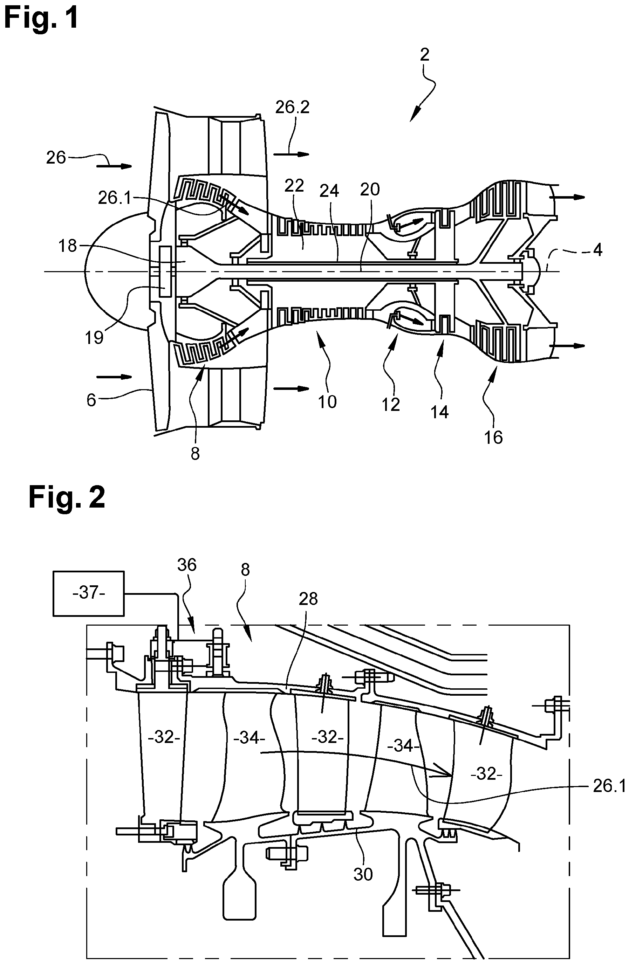

La figure 1 est une vue schématique en coupe longitudinale d'une turbomachine axiale conforme à l'invention.

La turbomachine axiale 2 illustrée à la figure 1 est en l'occurrence un turbomoteur double-flux. Elle comprend essentiellement, d'amont en avant suivant son axe principal 4, un turbofan 6, ou soufflante, un compresseur basse-pression 8, un compresseur haute-pression 10, une chambre de combustion 12, une turbine haute-pression 14 et une turbine basse-pression 16. La turbomachine axiale 2 est du type double-corps en ce qu'elle comprend un premier corps 18 comprenant le compresseur basse-pression 8 et la turbine basse-pression 16 reliés mécaniquement entre eux par le premier arbre de transmission 20, et un deuxième corps 22 comprenant le compresseur haute-pression 10 et la turbine haute-pression 14 reliés mécaniquement entre eux par le deuxième arbre de transmission 24 concentrique avec le premier arbre de transmission 20. Le turbofan 6 est cinématiquement relié au premier corps 18 via un réducteur 19 de sorte que la vitesse de rotation du turbofan 6 est proportionnelle à celle du premier arbre de transmission 20. Alternativement le turbofan 6 peut être mécaniquement relié directement au premier corps 18.

Le flux d'air 26 entrant du turbofan 6 est divisé en un flux primaire 26.1 et un flux secondaire 26.2. Le flux primaire 26.1 s'écoule à l'intérieur des premier et deuxième corps de la turbomachine 2 alors que le flux secondaire 26.2, entourant le flux primaire 26.1, s'écoule le long de l'extérieur de la turbomachine 2. Les flux primaire 26.1 et secondaire 26.2 se rejoignent à la sortie de la turbomachine 2. Le turbofan 6 présente ainsi un diamètre sensiblement supérieur à celui du compresseur basse-pression 8 à l'entrée de la turbomachine 2, directement en aval du turbofan 6. Le flux secondaire 26.2 participe de manière substantielle à la poussée de la turbomachine, signifiant que le turbofan 6 a un rôle majeur. Le rapport entre le flux secondaire et le flux primaire caractérise la turbomachine et est couramment désigné par « taux de dilution ». Sur les turbomachines actuelles, le taux de dilution est couramment supérieur ou égale à 5, voire supérieur ou égal à 10.

La figure 2 est vue de détail en coupe longitudinale du compresseur basse-pression 8 de la turbomachine de la figure 1. La figure ne montre que la partie haute de la coupe, étant entendu que la partie basse non représentée est symétrique, par rapport à l'axe principal, à la partie haute. La veine fluide annulaire du flux primaire 26.1 est délimitée radialement vers l'extérieur par le carter 28 et radialement vers l'intérieur par le tambour 30 du rotor. Le compresseur basse-pression 8 comprend une succession de rangées d'autres statoriques 32 et rotoriques 34. Les aubes statoriques 32 sont rigidement fixées au carter 28 au niveau de leurs extrémités radialement extérieures alors que les aubes rotoriques 34 sont rigidement fixées ou intégralement formées avec le tambour 30 au niveau de leurs extrémités radialement intérieures. Dans le cas présent, la première rangée d'aubes statoriques 32, à l'entrée du compresseur basse-pression 8 directement en aval du turbofan (non représenté), présente un calage variable, à savoir que chacune des aubes statoriques 32 de cette rangée est montée pivotante autour d'un axe essentiellement radial à la turbomachine. A cet effet, les extrémités radialement extérieures des aubes statoriques 32 présentent chacune un goujon monté pivotant sur un palier prévu sur le carter 28. Aussi, un mécanisme de commande 36 des aubes statoriques 32 est prévu afin d'assurer une commande synchronisée desdites aubes. Il est toutefois entendu que des commandes individuelles des aubes statoriques 32 ou encore de sous-groupes d'aubes statoriques 32 parmi la rangée peuvent être envisagées. Le principe du mécanisme de commande 36 est en soi connu de l'homme de métier.

Une unité de commande 37 peut être reliée électriquement au mécanisme de commande 36 de manière à commander la position angulaires des aubes statoriques à calage variable suivant un procédé selon l'invention qui va être décrit ci-après.

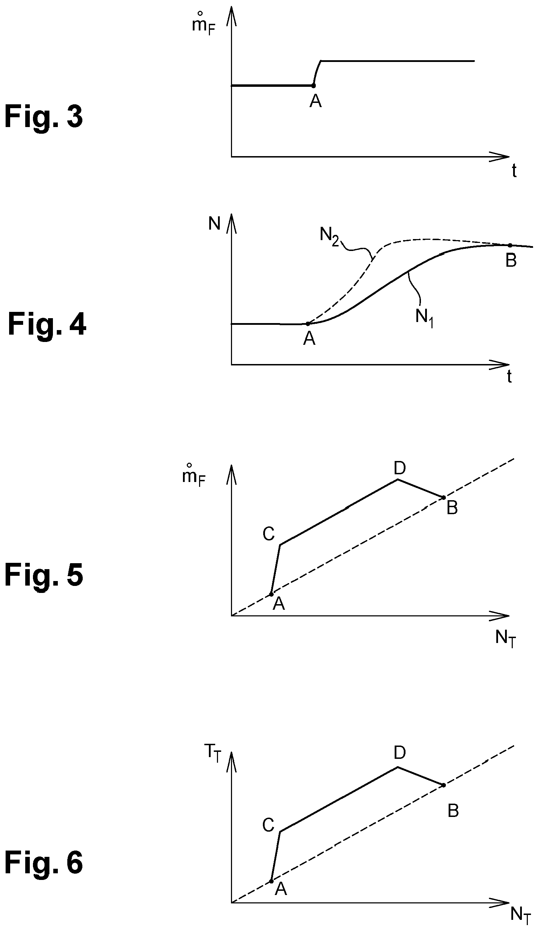

Les figures 3 à 8 illustrent de manière graphique les évolutions de différents paramètres de fonctionnement de la turbomachine lors d'une augmentation de charge.

Les figures 3 et 4 illustrent de manière graphique que le débit massique de carburant $\dot{m}_F$ ainsi que les régimes $N_1$ et $N_2$ des premier et deuxième corps 18 et 22 (voir figure 1), respectivement, de la turbomachine en fonction du temps. La variation du débit massique de carburant $\dot{m}_F$ montre une augmentation correspondant à une augmentation de charge de la turbomachine. Cette augmentation peut être abrupte, à la manière d'une fonction de Dirac, ou encore progressive. A des fins de simplification et de clarté d'exposé, les régimes $N_1$ et $N_2$ des premier et deuxième corps sont identiques avant l'augmentation de débit de carburant. Il est toutefois entendu qu'il s'agit là d'une condition particulière qui n'est pas nécessairement rencontrée dans la réalité, notamment compte tenu de l'indépendance mécanique des premier et deuxième corps. Les évolutions des régimes $N_1$ et $N_2$ montrent que le deuxième corps ($N_2$) accélère davantage que le premier corps ($N_1$), ce phénomène étant essentiellement dû au turbofan 6 (figure 1) augmentant de manière sensible l'inertie du premier corps 18 (figure 1). Aux courbes des régimes $N_1$ et $N_2$, le point A correspond au début de l'augmentation du débit massique de carburant $\dot{m}_F$, à un régime stabilisé de départ de la turbomachine, c'est-à-dire avant l'augmentation du débit massique de carburant $\dot{m}_F$. Le point B correspond à un nouveau régime stabilisé des premier et deuxième corps 18 et 22 (figure 1) suite à l'augmentation du débit massique de carburant $\dot{m}_F$.

La figure 5 montre les corrélations en mode stationnaire et en mode transitoire entre le débit massique de carburant $\dot{m}_F$ et le régime du turbofan $N_T$. Le régime du turbofan 6 (figure 1) est proportionnel au régime $N_1$ du premier corps 18 (figure 1). En l'occurrence, ces deux régimes sont égaux, à savoir $N_T=N_1$. La courbe en pointillé est la corrélation en régime stationnaire alors que la courbe en trait continu est la corrélation en régime transitoire. La courbe en régime stationnaire est volontairement simplifiée en étant proportionnelle, étant entendu qu'en pratique elle peut être plus complexe. Le débit d'air traversant la turbomachine est globalement proportionnel au régime $N_T$ du turbofan 6 (figure 1), si bien que le débit massique de carburant $\dot{m}_F$ est globalement proportionnel au régime $N_T$ du turbofan. Le régime transitoire imposé par l'augmentation de débit de carburant illustré à la figure 3, à savoir lié à un temps de réponse plus important du premier corps 18 (figure 1) illustré par la courbe de régime $N_1$ illustrée à la figure 4, a pour effet que la richesse de fonctionnement de la chambre de combustion de la turbomachine est accrue en passant par les points C et D.

La figure 6 montre les corrélations en mode stationnaire et en mode transitoire entre la température de la turbine $T_T$ (par exemple la turbine haute-pression) et le régime du turbofan $N_T$. Similairement à la figure 5, la courbe en pointillé est la corrélation en régime stationnaire alors que la courbe en trait continu est la corrélation en régime transitoire. La courbe en régime stationnaire est volontairement simplifiée en étant proportionnelle, étant entendu qu'en pratique elle peut être plus complexe. Le débit d'air traversant la turbomachine est globalement proportionnel au régime $N_T$ du turbofan 6 (figure 1), si bien que le débit massique de carburant $\dot{m}_F$ et donc la température dans la turbine $T_T$ sont globalement proportionnels au régime $N_T$ du turbofan. Similairement à la figure 5, le régime transitoire imposé par l'augmentation de débit de carburant illustré à la figure 3 a pour effet d'augmenter le débit massique de carburant davantage que le débit d'air traversant la turbomachine, conduisant alors à une plus grande augmentation de température dans la turbine $T_T$ en passant par les points C et D.

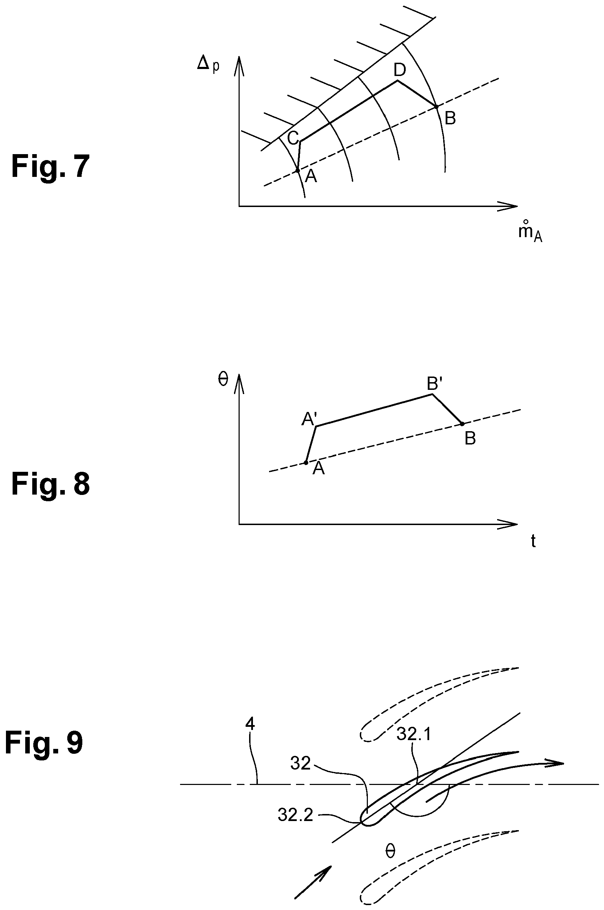

La figure 7 illustre de manière graphique l'évolution du taux de compression $\Delta p$ du compresseur haute-pression en fonction du débit massique d'air $\dot{m}_A$ traversant la turbomachine et donc le compresseur en question. Similairement aux figures 5 et 6, la courbe en pointillé est la corrélation en régime stationnaire alors que la courbe en trait continu est la corrélation en régime transitoire. L'augmentation de débit massique de carburant $\dot{m}_F$ telle qu'illustrée à la figure 3 provoque une augmentation du régime $N_2$ du deuxième corps 22 (figure 1) qui est plus rapide que celle du régime $N_1$ du premier corps 18 (figure 1), tel qu'illustré à la figure 4. Durant cette différence notable entre les régimes $N_1$ et $N_2$ où $N_2 > N_1$, le compresseur haute-pression va travailler avec une pression d'entrée inférieure et un régime accru, produisant alors un taux de compression $\Delta p$ plus important suivant la courbe passant par les points C et D. Cette courbe se rapproche de la limite de pompage (trait avec hachures) et avec un rendement plus faible.

En résumé, les figures 3 à 7 illustrent les effets transitoires indésirables suite à une augmentation de charge de la turbomachine. Afin de limiter, voire d'éliminer, ces effets transitoires indésirables, il est prévu de commander les aubes statoriques à calage variable du compresseur basse-pression de manière les ouvrir suite à l'augmentation de charge, et ce de manière transitoire.

La figure 8 illustre de manière graphique l'augmentation d'ouverture transitoire des aubes statoriques à calage variable du compresseur basse-pression. Similairement aux figures 5 à 7, la courbe en pointillé est une loi de commande en régime stationnaire alors que la courbe en trait continu est une loi de commande en régime transitoire. L'angle $\theta$ est mesuré par rapport à l'axe principal 4 (figure 1) et de manière à ce qu'une augmentation dudit angle revient à rapprocher les aubes d'un alignement avec l'axe principal. Une diminution de l'angle $\theta$ revient alors à rapprocher les aubes d'une position perpendiculaire à l'axe principal.

En régime stationnaire, l'angle $\theta$ des aubes statoriques à calage variable du compresseur basse-pression peut varier en fonction du régime du compresseur basse-pression en question, c'est-à-dire le régime $N_1$ du premier corps 18 (figure 1) et éventuellement également en fonction de la température $T_1$ dans le compresseur basse-pression, à savoir :

$$\theta = f\left(\frac{N_1}{\sqrt{T_1}}\right)$$

En régime transitoire, conformément à l'invention, l'angle $\theta$ est augmenté par rapport à la loi de commande en régime stationnaire, en passant par les points A' et B'. Cette commande revient à ouvrir davantage les aubes statoriques à calage variable durant la phase transitoire suite à une augmentation de débit massique de carburant $\dot{m}_F$ telle qu'illustrée à la figure 3. Cette ouverture transitoire a pour effet immédiat d'augmenter le débit massique d'air $\dot{m}_A$ traversant la turbomachine et permet ainsi de compenser les effets indésirables évoqués en relation avec les figures 5 à 7. Cette augmentation de débit massique d'air $\dot{m}_A$ traversant la turbomachine permet aussi d'augmenter la puissance transmise à la turbine basse-pression 16 du premier corps 18 (figure 1) et ainsi de diminuer le temps de réponse du régime $N_1$ dudit premier corps.

La loi de commande transitoire passant par les points A' et B' telle qu'illustrée à la figure 8 est purement illustrative. Il est avantageux que l'ouverture additionnelle par rapport à la loi de commande stationnaire (en trait interrompu) soit importante et rapide dès que l'augmentation du débit massique de carburant $\dot{m}_F$ a lieu, c'est-à-dire en l'occurrence dès le point A, afin d'immédiatement compenser les effets transitoires indésirables. Cette ouverture additionnelle peut être progressivement diminuée avant d'atteindre le point stationnaire cible B, essentiellement en raison des phénomènes d'inertie du premier corps. Il est ainsi entendu que la loi de commande transitoire pourra être adaptée aux contraintes spécifiques de la turbomachine à laquelle elle est appliquée, notamment en fonction du taux de dilution de la turbomachine.

La figure 9 est une représentation géométrique de l'angle $\theta$ des aubes statoriques à calage variable du compresseur basse-pression, tel qu'évoqué ci-avant. On peut observer que l'angle $\theta$ est mesuré autour du centre de rotation 32.1 des aubes statoriques 32, entre l'axe principal 4 et une droite passant par l'aube, comme par exemple passant par le bord d'attaque 32.2.

## Revendications

1. Procédé de commande de la position angulaire d'aubes statoriques (32) à calage variable disposées dans un compresseur (8) basse-pression d'une turbomachine (2), **caractérisé par** l'action suivante :
   lors d'une augmentation du débit de carburant, ouverture transitoire de la position angulaire des aubes statoriques (32), suivie d'une fermeture de la position angulaire des aubes statoriques (32).

2. Procédé selon la revendication 1, **caractérisé en ce que** le débit augmenté de carburant est associé à un régime cible de la turbomachine, la fermeture de la position angulaire des aubes statoriques étant atteinte lorsque le régime cible est atteint.

3. Procédé selon la revendication 2, **caractérisé en ce que** la fermeture de la position angulaire des aubes statoriques (32) est opérée de manière progressive avant que le régime cible soit atteint.

4. Procédé selon l'une des revendications 1 à 3, **caractérisé en ce que** le degré d'ouverture transitoire est fonction de la température dans la turbine, ledit degré d'ouverture transitoire étant d'autant plus grand que ladite température est élevée.

5. Procédé selon l'une des revendications 1 à 4, **caractérisé en ce que** le degré d'ouverture transitoire est fonction de l'augmentation de débit de carburant, ledit degré d'ouverture transitoire étant d'autant plus grand que ladite augmentation est élevée.

6. Procédé selon l'une des revendications 1 à 5, **caractérisé en ce que** l'ouverture transitoire et, le cas échéant la fermeture sont définies par rapport à une position angulaire en régime stabilisé.

7. Procédé selon la revendication 6, **caractérisé en ce que** la position angulaire en régime stabilisé est fonction du régime du compresseur basse-pression (8) et de la température en entrée dudit compresseur basse-pression (8).

8. Procédé selon l'une des revendications 1 à 7, **caractérisé en ce que** la turbomachine (2) est du type double flux et comprend un turbofan (6) couplé directement ou indirectement au compresseur (8).

9. Procédé selon la revendication 8, **caractérisé en ce que** la turbomachine (2) présente un taux de dilution supérieur ou égal à 10.

10. Procédé selon l'une des revendications 1 à 9, **caractérisé en ce que** la turbomachine (2) comprend un premier corps (18) avec le compresseur basse-pression (8) et une turbine basse-pression (16), et un deuxième corps (22) avec un compresseur haute-pression (10) en aval du compresseur basse-pression (8) et une turbine haute-pression (14) en amont de la turbine basse-pression (16), les aubes statoriques (32) à calage variable étant disposées à l'entrée du compresseur basse-pression (8).

11. Procédé selon l'une des revendications 8 et 9, et selon la revendication 10, **caractérisé en ce que** le turbofan (6) est couplé au premier corps (18) via un réducteur (19).

12. Procédé selon l'une des revendications 2 et 3, et selon l'une des revendications 10 et 11, **caractérisé en ce que** le régime cible est un régime cible du premier corps (18).

13. Unité de commande (37) d'aubes statoriques (32) à calage variable d'une turbomachine, **caractérisée en ce que** l'unité de commande est configurées pour exécuter le procédé selon l'une des revendications 1 à 12.

14. Turbomachine (2) comprenant un compresseur basse-pression (8), une chambre de combustion (12) et une turbine (14, 16), le compresseur basse-pression (8) comprenant une rangée d'aubes statoriques (32) à calage variable, et une unité de commande (37) desdites aubes statoriques à calage variable, **caractérisée en ce que** l'unité de commande (37) est selon la revendication 13.

# Fig. 1

# Fig. 2

**Fig. 3**

**Fig. 4**

**Fig. 5**

**Fig. 6**

Fig. 7

Fig. 8

Fig. 9

Europäisches
Patentamt

European
Patent Office

Office européen
des brevets

**RAPPORT DE RECHERCHE EUROPEENNE**

Numéro de la demande

EP 21 17 2478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 199 783 A1 (ROLLS ROYCE PLC [GB]) 2 août 2017 (2017-08-02) * figures 1-10 * * alinéas [0002] - [0020], [0027] - [0042] * | 1-14 | INV. F02C9/20 F01D17/16 F02C9/54 |
| A | EP 2 937 522 A1 (ROLLS ROYCE PLC [GB]) 28 octobre 2015 (2015-10-28) * figures 1-10 * * alinéas [0001] - [0027], [0029] - [0042] * | 1-14 | |
| A | EP 3 450 729 A1 (PRATT & WHITNEY CANADA [CA]) 6 mars 2019 (2019-03-06) * figures 1-5 * * alinéas [0002] - [0024], [0027] - [0056] * | 1-14 | |

-----

-----

-----

| | DOMAINES TECHNIQUES RECHERCHES (IPC) |
|---|---|
| | F02C F01D |

Le présent rapport a été établi pour toutes les revendications

| Lieu de la recherche | Date d'achèvement de la recherche | Examinateur |
|---|---|---|
| La Haye | 29 septembre 2021 | Rakotonanahary, S |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 2478

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2021

| Document brevet cité au rapport de recherche | | Date de publication | Membre(s) de la famille de brevet(s) | | Date de publication |
|---|---|---|---|---|---|
| EP 3199783 | A1 | 02-08-2017 | EP<br>US | 3199783 A1<br>2017211485 A1 | 02-08-2017<br>27-07-2017 |
| EP 2937522 | A1 | 28-10-2015 | EP<br>US | 2937522 A1<br>2015308353 A1 | 28-10-2015<br>29-10-2015 |
| EP 3450729 | A1 | 06-03-2019 | CA<br>EP<br>US | 3015559 A1<br>3450729 A1<br>2019061969 A1 | 28-02-2019<br>06-03-2019<br>28-02-2019 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011042636 A1